(19)

Europäisches
Patentamt
European
Patent Office
Office européen
des brevets

(11)  EP 4 737 873 A1

(12)  **EUROPEAN PATENT APPLICATION**

(43) Date of publication:
06.05.2026  Bulletin 2026/19

(21) Application number: 25204565.3

(22) Date of filing: 25.09.2025

(51) International Patent Classification (IPC):
**G01L 1/22** (2006.01)     **B60T 17/22** (2006.01)

(52) Cooperative Patent Classification (CPC):
**G01L 1/2231; B60T 17/22**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  31.10.2024  CN 202411545068

(71) Applicant: Honeywell International Inc.
Charlotte, NC 28202 (US)

(72) Inventors:
• RAO, Jie
Charlotte, 28202 (US)
• GAO, Jun
Charlotte, 28202 (US)
• TIAN, Ruyuan
Charlotte, 28202 (US)
• LIU, Huan
Charlotte, 28202 (US)
• WANG, Jie
Charlotte, 28202 (US)

(74) Representative: Haseltine Lake Kempner LLP
Cheapside House
138 Cheapside
London EC2V 6BJ (GB)

(54)  **FORCE SENSING APPARATUS WITH STRESS-CONCENTRATION SECTIONS FOR SENSING FORCES ASSOCIATED WITH A VEHICLE BRAKING SYSTEM**

(57)  Various embodiments described herein relate to providing a force sensing apparatus with stress-concentration sections for sensing forces associated with a vehicle braking system. In this regard, a force sensing apparatus includes a metal elastomer element, a set of sensing elements, and a circuit board element. The metal elastomer element includes a set of stress-concentration sections formed on a surface of the metal elastomer element. The set of sensing elements are disposed on the set of stress-concentration sections. The circuit board element includes a shape associated with the surface of the metal elastomer element. The set of sensing elements are configured to detect a brake force based on one or more deformations associated with the set of stress-concentration sections formed on the surface of the metal elastomer element. The set of sensing elements are further configured to transform the brake force into one or more electrical signals.

FIG. 1

EP 4 737 873 A1

**Description**

**BACKGROUND**

A force sensor may be used to detect forces acting on the force sensor and may be implemented in various applications such as, for example, to detect brake force in a vehicle braking system. However, such force sensors may be susceptible to technical problems, challenges, and/or limitations resulting in inefficiencies and/or inaccuracies related to detected forces.

**BRIEF SUMMARY**

Various embodiments described herein relate to methods, apparatuses, and systems for improving sensitivity and performance of an apparatus such as, for example, a force sensing apparatus.

In an embodiment, force sensing apparatus includes a metal elastomer element, a set of sensing elements, and a circuit board element. In one or more embodiments, the metal elastomer element includes a set of stress-concentration sections formed on a surface of the metal elastomer element. In one or more embodiments, the set of sensing elements are disposed on the set of stress-concentration sections. In one or more embodiments, the circuit board element includes the shape associated with a surface of the metal elastomer element. In one or more embodiments, the set of sensing elements is further disposed between the metal elastomer element and the circuit board element. In one or more embodiments, the set of sensing elements are configured to (i) detect a brake force associated with a vehicle braking system based on one or more deformations associated with the set of stress-concentration sections formed on the surface of the metal elastomer element and (ii) transform the brake force into one or more electrical signals configured for processing via the circuit board element.

In another embodiment, a method is provided. In one or more embodiments, the method includes receiving, by a circuit board element, a brake force indication from a set of sensing elements in electronic communication with the circuit board element. In one or more embodiments, the set of sensing elements are disposed between a metal elastomer element and the circuit board element. In one or more embodiments, the set of sensing elements are configured to detect the brake force indication based on one or more deformations associated with a set of stress-concentration sections formed on a surface of the metal elastomer element. In one or more embodiments, the method additionally or alternatively includes transforming, by the circuit board element, the brake force indication into one or more communication signals. In one or more embodiments, the method additionally or alternatively includes initiating, by the circuit board element, transmission of the one or more communication signals via a connector element of a housing unit that is in electronic communication with the circuit board element.

In yet another embodiment, a computer program product is provided. In one or more embodiments, the computer program product includes at least one computer-readable storage medium having program instructions embodied thereon. In one or more embodiments, the program instructions are executable by a processor to cause the processor to receive a brake force indication from a set of sensing elements in electronic communication with a circuit board element. In one or more embodiments, the set of sensing elements are disposed between a metal elastomer element and the circuit board element. In one or more embodiments, the set of sensing elements are configured to detect the brake force indication based on one or more deformations associated with a set of stress-concentration sections formed on a surface of the metal elastomer element. In one or more embodiments, the program instructions are executable by the processor to cause the processor to transform the brake force indication into one or more communication signals. In one or more embodiments, the program instructions are executable by the processor to cause the processor to initiate transmission of the one or more communication signals via a connector element of a housing unit that is in electronic communication with the circuit board element.

The foregoing illustrative summary, as well as other exemplary objectives and/or advantages of the disclosure, and the manner in which the same are accomplished, are further explained in the following detailed description and its accompanying drawings.

**BRIEF DESCRIPTION OF THE DRAWINGS**

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:

FIG. 1 illustrates a diagram depicting an example apparatus in accordance with one or more embodiments of the present disclosure;

FIG. 2 illustrates another diagram depicting an example apparatus in accordance with one or more embodiments of the present disclosure;

FIG. 3 illustrates yet another diagram depicting an example apparatus in accordance with one or more embodiments of the present disclosure;

FIG. 4 illustrates yet another diagram depicting an example apparatus in accordance with one or more embodiments of the present disclosure;

FIG. 5 illustrates yet another diagram depicting an example apparatus in accordance with one or more embodiments of the present disclosure;

FIG. 6A illustrates an example strain distribution provided by a set of stress-concentration sections in accordance with one or more embodiments of the present disclosure;

FIG. 6B illustrates an example Wheatstone bridge circuit in accordance with one or more embodiments of the present disclosure;

FIG. 7 illustrates yet another diagram depicting an example apparatus in accordance with one or more embodiments of the present disclosure;

FIG. 8 illustrates an example vehicle braking system in accordance with one or more embodiments of the present disclosure;

FIG. 9 illustrates an example system depicting an example controller component in accordance with one or more embodiments of the present disclosure; and

FIG. 10 illustrates a flow diagram for providing force sensing, in accordance with one or more embodiments of the present disclosure.

## DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

The phrases "in an example embodiment," "some embodiments," "various embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such components or features may be optionally included in some embodiments, or may be excluded.

The term "electronically coupled" or "in electronic communication with" in the present disclosure refer to two or more electrical elements (for example, but not limited to, an example processing circuitry, communication module, input/output module memory, humidity sensing component, cooling element, gas detection component) and/or electric circuit(s) being connected through wired means (for example but not limited to, conductive wires or traces) and/or wireless means (for example but not limited to, wireless network, electromagnetic field), such that data and/or information (for example, electronic indications, signals) may be transmitted to and/or received from the electrical elements and/or electric circuit(s) that are electronically coupled.

A force sensor may be used to detect forces acting on the force sensor and may be implemented in various applications such as, for example, to detect brake force in a vehicle braking system. However, such force sensors for vehicle braking systems may be susceptible to technical problems, challenges, and/or limitations resulting in inefficiencies and/or inaccuracies related to detected forces and/or the vehicle braking system. In an example, a vehicle braking system may be an electrical-mechanical-braking (EMB) system that includes a set of strain gauges and/or circuitry in a force sensor of the EMB system. However, the set of strain gauges, circuitry, and/or components of the force sensor are typically susceptible to damage and/or performance inefficiencies due to electromagnetic interference, dirt, and/or liquid.

Additionally, the set of strain gauges may be susceptible to inefficiencies and/or inaccuracies related to detected forces via the force sensor. This may result in further inefficiencies and/or inaccuracies related to the EMB system and/or a vehicle that includes the EMB system.

In an example, it is desirable to position a strain gauge or other sensing element at a location where stress changes are most sensitive to accurately detect forces. If a position of a strain gauge or other sensing element is offset from the location where stress changes are most sensitive, accuracy of the output from the strain gauge or other sensing element will decline. Additionally, if a contact point for a strain gauge or other sensing element is uneven, loading forces will be unbalanced and the output from the strain gauge or other sensing element will drift, resulting in inaccuracies for detecting forces. As such, it is desirable to position a strain gauge or other sensing element at an optimal location with respect to, for example, stainless steel associated with deformations, to accurately detect forces.

To address these and/or other issues related to traditional force sensors, a force sensing apparatus for a vehicle braking system is disclosed herein. The term "force sensing apparatus" may refer to an apparatus that may detect, measure, and/or identify force(s) associated with a vehicle braking system. The force sensing apparatus may minimize inefficiencies and/or inaccuracies related to detected forces and/or a vehicle braking system as compared to a traditional force sensor. In various embodiments, the force sensing apparatus may include a force sensor structure with an improved ingress protection level as compared to a traditional force sensor structure is provided. The force sensor structure may also provide improved protection of components such as strain gauges, circuitry, and/or other components as compared to a traditional force sensor structure.

In various embodiments, the force sensing apparatus may include a metal elastomer that transforms brake forces into one or more deformations. The metal elastomer may be configured to deform in response to a force. The force sensing apparatus may additionally include one or more sensing elements that transform the one or more deformations into one or more electrical signals. In various embodiments, the metal elastomer may include a set of stress-concentration sections formed on a surface of the metal elastomer element. The set of stress-concentration sections may respectively correspond to a location where stress changes are most sensitive with respect to the metal elastomer. In various embodiments, the set of stress-concentration sections may be formed based on a set of slots or a set of holes of the metal elastomer to generate a local stress-concentration effect for the metal elastomer. As such, the set of stress-concentration sections may provide a plurality of strain peaks to enable placement of the one or more sensing elements at a location of the set of stress-concentration sections. In various embodiments, the set of stress-concentration sections enable placement of the one or more sensing elements to form a Wheatstone bridge circuit for sensing force (e.g., break force). Accordingly, accuracy of the sensed force output (e.g., the one or more electrical signals associated with sensed force) provided by the one or more sensing elements may be improved. For example, measurement error and/or drift associated with the one or more sensing elements may be mitigated by placing the one or more sensing elements at a location of the set of stress-concentration sections.

The force sensing apparatus may additionally include a circuitry (e.g., a signal processing circuit) that converts the one or more electrical signals into one or more communication signals. In various embodiments, the circuitry can be a flexible circuit board to enable sensing of the one or more deformations via the one or more sensing elements and/or the metal elastomer. In various embodiments, the force sensing apparatus may additionally include a housing unit to provide protection for the one or more sensing elements and/or the circuitry. In various embodiments, the housing unit may include a connector that is electrically coupled to the circuitry to receive the one or more communication signals. As such, various embodiments of the present disclosure may improve performance, sensitivity, accuracy, and/or efficiency of a force sensing apparatus. In various embodiments, the improved force sensing apparatus may further enable an improved vehicle braking system (e.g., an improved EMB system) and/or an improved vehicle that include the vehicle braking system.

To address challenges and limitations associated with traditional force sensors, various examples of the present disclosure may be provided. For example, various examples of the present disclosure may provide example force sensing apparatuses, methods, computer program products, and/or systems. In some embodiments, a force sensing apparatus is provided. In some examples, the force sensing apparatus may include a metal elastomer element, a circuit board element, a set of sensing elements, and/or a housing unit. In some examples, the circuit board element may include a shape associated with the surface of the metal elastomer element. In some examples, the shape associated with the surface of the metal elastomer element includes a ring shape with a through hole portion. In some examples, the metal elastomer element includes stainless steel or another type of metal.

In some examples, the metal elastomer element includes a set of stress-concentration sections formed on a surface of the metal elastomer element. Additionally, in some examples, the set of sensing elements may be disposed on the set of stress-concentration sections. In some examples, the set of sensing elements may also be disposed between the metal elastomer element and the circuit board element. In some examples, the set of sensing elements are configured to detect a brake force associated with a vehicle braking system based on one or more deformations associated with the set of stress-concentration sections formed on the surface of the metal elastomer element. In some examples, the vehicle braking system is an EMB system. In some examples, the set of sensing elements are additionally or alternatively configured to transform the brake force into one or more electrical signals for processing via the circuit board element. In some examples, the set of sensing elements comprise a set of strain gauges. In some examples, the set of sensing elements form a Wheatstone bridge circuit.

In some examples, the set of stress-concentration sections is formed proximate to a through hole of the metal elastomer element. In some examples, the set of stress-concentration sections may be formed based on a set of slots formed on a surface of metal elastomer element. Additionally, in some examples, the set of sensing elements is disposed on an area of a surface of the metal elastomer element that aligns with the set of slots.

In some examples, a first stress-concentration section of the set of stress-concentration sections is formed at a first depth with respect to the surface. Additionally, in some examples, a second stress-concentration section of the set of stress-concentration sections is formed at a second depth with respect to the surface, and the second depth is different than the first depth.

In some examples, the set of sensing elements include a first set of sensing elements disposed on a first stress-concentration section of the set of stress-concentration sections. Additionally, in some examples, the set of sensing elements include a second set of sensing elements disposed on a second stress-concentration section of the set of stress-concentration sections. In some examples, the first set of sensing elements and the second set of sensing elements form a Wheatstone bridge circuit.

In some examples, the housing unit includes a connector element electrically coupled to the circuit board element to receive communication data associated with the one or more electrical signals via the circuit board element. In some examples, the communication data includes analog communication data. In some examples, the communication data includes digital communication data. In some examples, the housing unit is disposed on the metal elastomer element to form a seal for the circuit board and the set of sensing elements. In some examples, the housing unit includes a through hole portion associated with a first diameter. In some examples, the housing unit additionally includes a rubber structure associated with a second diameter, and wherein the second diameter is greater than the first diameter. In some examples, the rubber structure binds the circuit board element to the metal elastomer element.

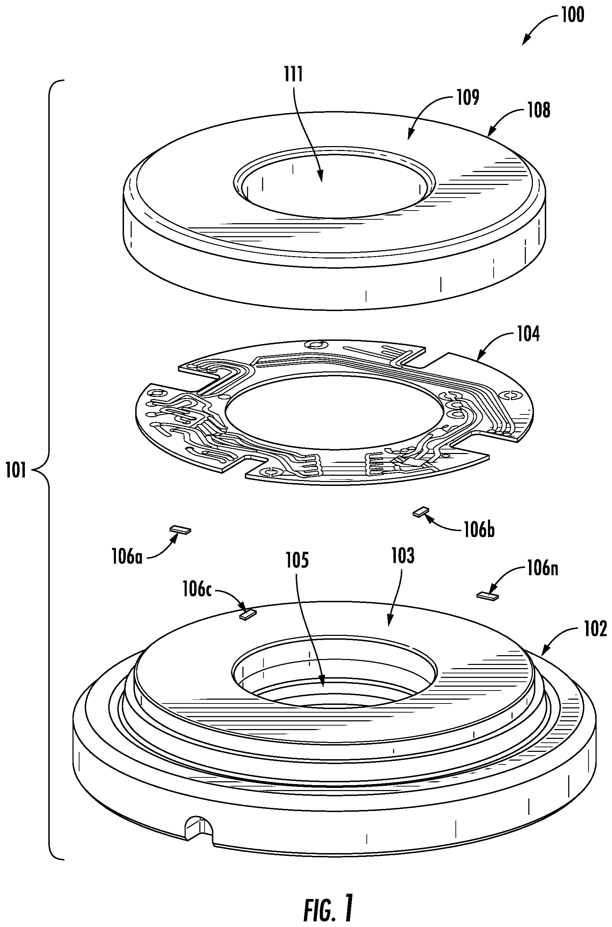

Referring now to FIG. 1, a diagram depicting a perspective view 100 of a force sensing apparatus 101 in accordance with various embodiments of the present disclosure is provided. As depicted in FIG. 1, the force sensing apparatus 101 includes a metal elastomer element 102, a circuit board element 104, a set of sensing elements 106a-n, and/or a housing unit 108. The metal elastomer element 102 may be a metal elastomer that transforms brake forces associated with a vehicle braking system into one or more deformations. The metal elastomer element 102 may include a metal material that is capable of being deformed in response to a force and/or pressure. In an embodiment, the metal elastomer element 102 may include stainless steel (e.g., stainless steel material 17-4, etc.). However, it is to be appreciated that, in certain embodiments, the metal elastomer element 102 may include another type of metal material. Additionally, the metal elastomer element 102 may include a surface 103. In various embodiments, a shape of the surface 103 may be a ring shape with a through hole portion 105.

In various embodiments, the circuit board element 104 may be a flexible circuit board element. For example, a form of the circuit board element 104 may be dynamically altered based on the one or more deformations associated with the metal elastomer element 102. In various embodiments, a shape of the circuit board element 104 may correspond to a shape of the surface 103 of the metal elastomer element 102. For example, the circuit board element 104 may include a shape associated with the surface 103 of the metal elastomer element 102.

The set of sensing elements 106a-n may be disposed on a set of stress-concentration sections formed on the surface 103 of the metal elastomer element 102. The set of stress-concentration sections may respectively correspond to a location where stress changes are most sensitive with respect to the surface 103 of the metal elastomer element 102. In various embodiments, the set of stress-concentration sections may be formed on one or more areas of the surface 103 that align with a set of slots or a set of holes of the metal elastomer element 102 to generate a local stress-concentration effect for the metal elastomer element 102. As such, the set of stress-concentration sections may provide a plurality of strain peaks to enable placement of the set of sensing elements 106a-n at a location of the set of stress-concentration sections.

Additionally, in various embodiments, the set of sensing elements 106a-n may be disposed between the metal elastomer element 102 and the circuit board element 104. The set of sensing elements 106a-n may be configured to detect a brake force associated with a vehicle braking system based on the one or more deformations associated with the set of stress-concentration sections formed on the surface 103 of the metal elastomer element 102. The set of sensing elements 106a-n may be additionally configured to transform the brake force into one or more electrical signals. In some embodiments, the vehicle brake system may be an EMB system. The set of sensing elements 106a-n may be, for example, a set of strain gauges that respectively sense a force and/or pressure associated with a respective portion of the metal elastomer element 102. In some embodiments, the set of sensing elements 106a-n form a Wheatstone bridge circuit.

The housing unit 108 may be disposed on the metal elastomer element 102 to form a seal for the circuit board element 104 and the set of sensing elements 106a-n. In some embodiments, a surface 109 of the housing unit 108 may include a metal material. Additionally, a through hole portion 111 of the housing unit 108 may include a plastic material. In some embodiments, the through hole portion 111 of the housing unit 108 may include plastic structure to bind the housing unit 108 to the metal elastomer element 102. By binding the housing unit 108 to the metal elastomer element 102, the circuit board element 104 and/or the set of sensing elements 106a-n may also be bound to the metal elastomer element 102.

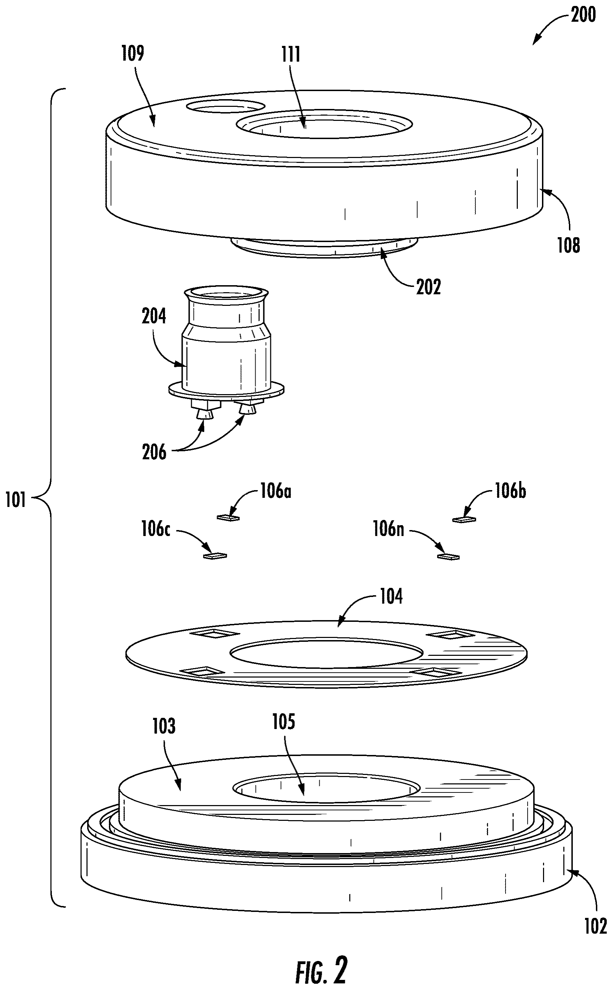

Referring to FIG. 2, a diagram depicting a perspective view 200 of the force sensing apparatus 101 in accordance with various embodiments of the present disclosure is provided. The perspective view 200 may illustrate to one or more additional embodiments of the force sensing apparatus 101. As depicted in FIG. 2, the force sensing apparatus 101 includes the metal elastomer element 102, the circuit board element 104, the set of sensing elements 106a-n, and/or the housing unit 108.

In some embodiments, the through hole portion 111 of the housing unit 108 may include a rubber structure 202 that is attached to the plastic material of the through hole portion 111 to bind the housing unit 108 to the metal elastomer element 102. By binding the housing unit 108 to the metal elastomer element 102, the circuit board element 104 and/or the set of sensing elements 106a-n may also be bound to the metal elastomer element 102. In some embodiments, the through hole portion 111 of the housing unit 108 may include a first diameter. Additionally, the rubber structure 202 may include a second diameter that is greater than the first diameter in order to facilitate biding of the housing unit 108 to the metal elastomer element 102 via the through hole portion 105 of the housing unit 108.

In some embodiments, the housing unit 108 includes a connector element 204. The connector element 204 may be electrically coupled to the circuit board element 104 to receive communication data associated with the one or more electrical signals via the circuit board element 104. The communication data may include analog communication data. Alternatively, the communication data may include digital communication data. In some embodiments, the connector element 204 may additionally facilitate biding of the housing unit 108 to the metal elastomer element 102. In some embodiments, the connector element 204 may be electrically coupled to the circuit board element 104 via one or more metal contacts 206.

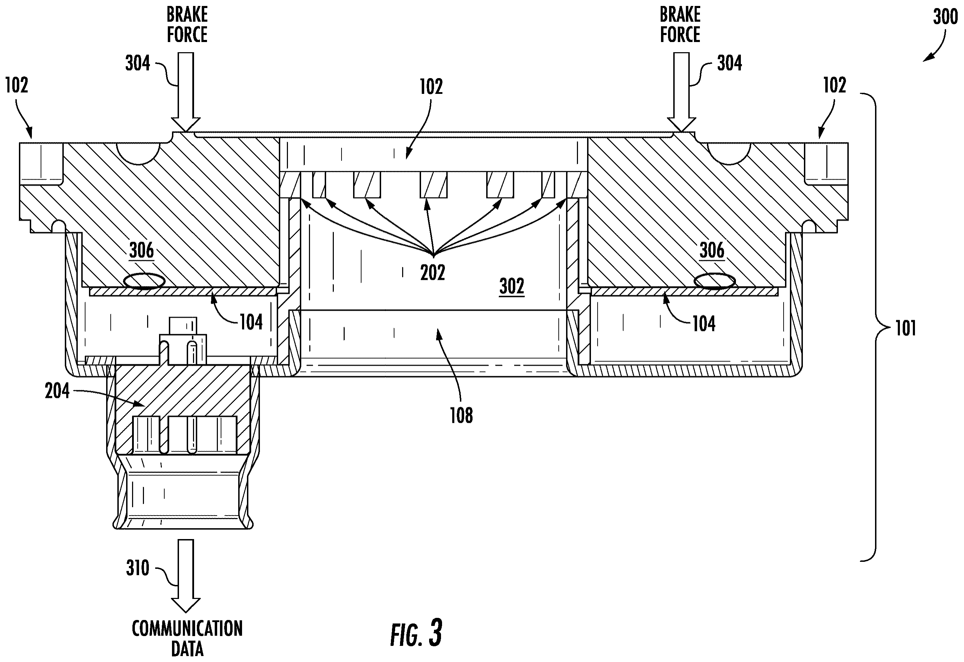

Referring to FIG. 3, a diagram depicting a side view 300 of the force sensing apparatus 101 in accordance with various embodiments of the present disclosure is provided. The side view 300 may illustrate to one or more additional embodiments of the force sensing apparatus 101. As depicted in FIG. 3, the metal elastomer element 102 of the force sensing apparatus 101 may be configured to attach to the housing unit 108. In some embodiments, the metal elastomer element 102 may be attached to the housing unit via the rubber structure 202. For example, the rubber structure 202 may be attached to a plastic material 302 of the housing unit 108. Additionally, the rubber structure 202 and/or the plastic material 302 may attach to the metal elastomer element 102 via the through hole portion 105 of the metal elastomer element 102.

In various embodiments, a brake force 304 may be applied to the metal elastomer element 102. The brake force 304 may cause one or more deformations 306 to form on the surface 103 of the metal elastomer element 102. In various embodiments, the one or more deformations 306 may respectively correspond to a location of a stress-concentration section of the set of stress-concentration sections formed on the surface 103 of the metal elastomer element 102. In various embodiments, the metal elastomer element 102 being attached to the housing unit 108 may cause the circuit board element 104 to be attached to the metal elastomer element 102 and/or the housing unit 108. For example, the circuit board element 104 may be attached to the surface 103 of the metal elastomer element 102. In various embodiments, the circuit board element 104 may be a flexible circuit board that dynamically moves in response to the one or more deformations 306.

In some embodiments, the connector element 204 may be electrically coupled to the circuit board element 104 to receive communication data 310 associated with the one or more deformations 306 via the circuit board element 104. The communication data 310 may include analog communication data. Alternatively, the communication data 310 may include digital communication data. In some embodiments, the communication data 310 may be provided as output via the connector element 204. For example, the communication data 310 may be transmitted to a vehicle braking system (e.g., an EMB system) via the connector element 204. In some embodiments, the communication data 310 may include control data for controlling one or more components of a vehicle. For example, the control data may be configured to control one or more vehicle components communicatively coupled to the vehicle braking system (e.g., the EMB system).

In some embodiments, a process for disposing the set of sensing elements 106a-n and/or the circuit board element 104 in the force sensing apparatus 101 may include forming an elastomer, disposing one or more sensing elements (e.g., the set of sensing elements 106a-n) on the elastomer, combining the elastomer and the one or more sensing elements via sintering, fixating a circuit board element (e.g., the circuit board element 104) via a bonding material, and/or connecting the one or more sensing elements and the circuit board element via bonding.

In some embodiments, the elastomer may be formed via a three-dimensional printing process or another type of production process for the elastomer. In some embodiments, heat and/or pressure may be applied to combine the elastomer and the one or more sensing elements. In some embodiments, the circuit board element may be fixated by glue or another type of bonding material. In some embodiments, the set of sensing elements 106a-n may be bonded to the circuit board element 104 via a bonding material such as glue or another type of bonding material. In some embodiments, the circuit board element 104 with the bonded set of sensing elements 106an may be disposed on the metal elastomer element 102 to facilitate sensing of the one or more deformations 306.

In some embodiments, the circuit board element 104 may be directly pasted to the surface 103 of the metal elastomer element 102. In some embodiments, a surface of the circuit board element 104 may be pre-arranged with tape (e.g., tape cut to the same shape and size of the surface 103 of the metal elastomer element 102). In some embodiments, when the circuit board element 104 is aligned with the surface 103 of the metal elastomer element 102, the rubber structure 202 may bind the circuit board element 104 and metal elastomer element 102 to provide a fixed structure portion of the force sensing apparatus 101 for sensing the one or more deformations 306.

In various embodiments, the metal elastomer element 102 of the force sensing apparatus 101 may be configured to attach to the housing unit 108. In some embodiments, the metal elastomer element 102 may be attached to the housing unit via the rubber structure 202. For example, the rubber structure 202 may be attached to the plastic material 302 of the housing unit 108. Additionally, the rubber structure 202 and/or the plastic material 302 may attach to the metal elastomer element 102 via the through hole portion 105 of the metal elastomer element 102. For example, the through hole portion 105 may include a first diameter (e.g., D1). Additionally, in some embodiments, the rubber structure 202 may include a second diameter (e.g., D2) that is greater than the first diameter (e.g., D1) of the hole portion 105. As such, the rubber structure 202 may enable secure attachment of the housing unit 108 via the through hole portion 105 of the metal elastomer element 102. In some embodiments, the housing unit 108 may be further attached to the metal elastomer element 102 via welding or glue at one or more attachment locations where surfaces of the housing unit 108 and the metal elastomer element 102 are in contact.

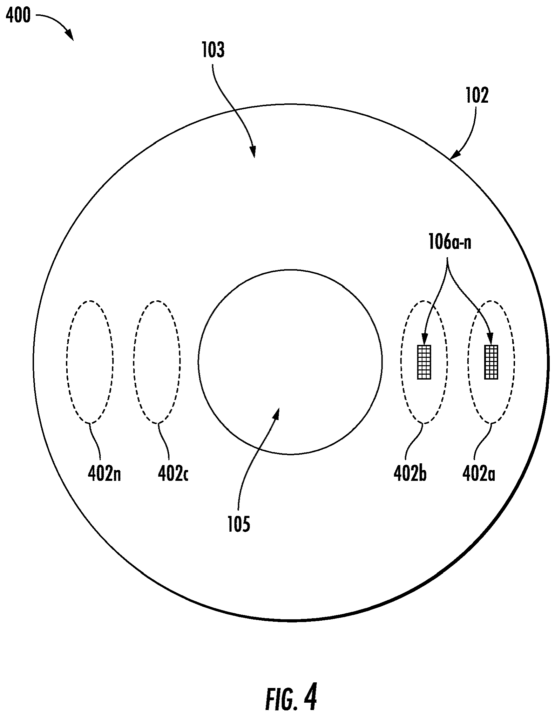

Referring to FIG. 4, a diagram depicting a top view 400 of a portion of the force sensing apparatus 101 in accordance with various embodiments of the present disclosure is provided. For example, the top view 400 may illustrate placement of the set of sensing elements 106a-n on the surface 103 of the metal elastomer element 102 to facilitate sensing of the one or more deformations 306. In some embodiments, the metal elastomer element 102 may include a set of stress-concentration sections 402a-n formed on the surface 103 of the metal elastomer element 102. Additionally, the set of sensing elements 106a-n may be disposed on at least a subset of the set of stress-concentration sections 402a-n formed on the surface 103 of the metal elastomer element 102. In some embodiments, the set of sensing elements 106a-n may be disposed on a single side of the through hole portion 105 of the metal elastomer element 102. For example, a first sensing element of the set of sensing elements 106a-n may be disposed on a first stress-concentration section 402a of the set of stress-concentration sections 402a-n and a second sensing element of the set of sensing elements 106a-n may be disposed on a second stress-concentration section 402b of the set of stress-concentration sections 402a-n.

In some embodiments, the first stress-concentration section 402a of the set of stress-concentration sections 402a-n may be formed at a first depth with respect to the surface 103. Additionally, the second stress-concentration section 402b of the set of stress-concentration sections 402a-n may be formed at a second depth with respect to the surface 103. In some embodiments, the second depth is different than the first depth. For example, the first depth of the first stress-concentration section 402a may be greater than the second depth of the second stress-concentration section 402b. Alternatively, the first depth of the first stress-concentration section 402a may be less than the second depth of the second stress-concentration section 402b. In other embodiments, the first stress-concentration section 402a and the second stress-concentration section 402b may include a corresponding depth. In some embodiments, the set of sensing elements 106a-n may be disposed on both sides of the through hole portion 105 of the metal elastomer element 102 at the respective locations for the set of stress-concentration section 402an.

The set of stress-concentration sections 402a-n may respectively correspond to a location where stress changes are most sensitive with respect to the surface 103 of the metal elastomer element 102. In various embodiments, the set of stress-concentration sections 402a-n may be aligned with a set of slots below the surface 103 of the metal elastomer element 102 to generate a local stress-concentration effect on the surface 103 of the metal elastomer element 102. As such, the set of stress-concentration sections 402a-n may provide a plurality of strain peaks to enable placement of the set of sensing elements 106a-n at a location of the set of stress-concentration sections. In some embodiments, the set of sensing elements 106a-n may be additionally disposed and/or arranged proximate to the through hole portion 105 of the metal elastomer element 102 to provide improved sensing of the one or more deformations 306.

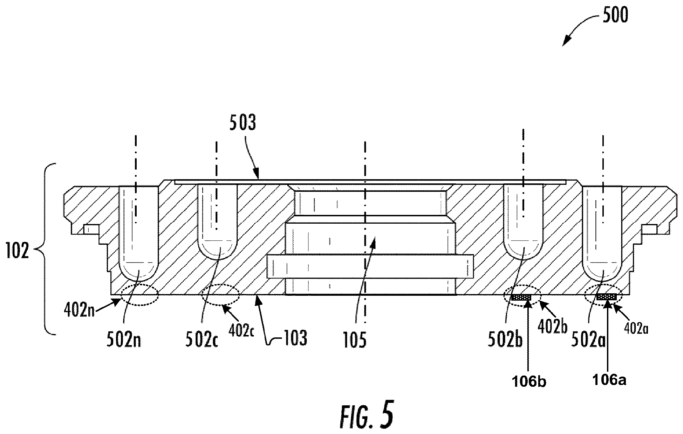

Referring to FIG. 5, a diagram depicting a side view 500 of a portion of the force sensing apparatus 101 in accordance with various embodiments of the present disclosure is provided. For example, the side view 500 may illustrate the set of stress-concentration sections 402a-n with respect to the surface 103 of the metal elastomer element 102 to facilitate sensing of the one or more deformations 306. In some embodiments, the metal elastomer element 102 may include the set of stress-concentration sections 402a-n formed on the surface 103 of the metal elastomer element 102. In some embodiments, the set of stress-concentration sections 402a-n may be disposed on both sides of the through hole portion 105 of the metal elastomer element 102. For example, the first stress-concentration section 402a and the second of stress-concentration section 402b of the set of stress-concentration sections 402a-n may be located at a first side of the through hole portion 105 of the metal elastomer element 102. Additionally, a third stress-concentration section 402c and a fourth of stress-concentration section 402n of the set of stress-concentration sections 402a-n may be located at a second side of the through hole portion 105 of the metal elastomer element 102. The second side may be opposite to the first side.

In some embodiments, the set of stress-concentration sections 402a-n may be associated with a set of slots 502a-n with respect to the surface 103. For example, the set of slots 502a-n may be formed on a surface 503 of the metal elastomer element 102. The surface 503 may be an opposite surface with respect to the surface 103. For example, the surface 103 may be a first surface of the metal elastomer element 102 that includes the set of stress-concentration sections 402a-n and the surface 503 of may be a second surface of the metal elastomer element 102 that includes the set of slots 502a-n. The set of slots 502a-n on the surface 502 may generate a local stress-concentration effect on the surface 103 of the metal elastomer element 102 to provide the set of stress-concentration sections 402a-n associated with the stress-concentration effect. For example, the set of slots 502a-n on the surface 503 may enable a set of strain peaks on the surface 103 to provide the set of stress-concentration sections 402a-n associated with the set of strain peaks. In some embodiments, the set of slots 502a-n may be a set of holes formed on the surface 503 and/or the surface 103.

In some embodiments, the set of sensing elements 106a-n may be disposed on an area of the surface 103 associated with the set of slots 502a-n. For example, the set of sensing elements 106a-n may be disposed on the set of stress-concentration sections 402a-n formed on the surface 103 of the metal elastomer element 102. In an embodiment, a sensing element 106a of the one or more sensing elements 106a-n may be disposed on the first stress-concentration section 402a of the set of stress-concentration sections 402a-n. Additionally, a sensing element 106b of the one or more sensing elements 106a-n may be disposed on the second stress-concentration section 402b of the set of stress-concentration sections 402a-n. In some embodiments, a sensing element 106c of the one or more sensing elements 106a-n may be additionally disposed on the third stress-concentration section 402c of the set of stress-concentration sections 402a-n and/or a sensing element 106n of the one or more sensing elements 106a-n may be additionally disposed on the fourth stress-concentration section 402n of the set of stress-concentration sections 402a-n.

In some embodiments, the first stress-concentration section 402a of the set of stress-concentration sections 402a-n may be formed at a first depth with respect to the surface 503. Additionally, the second stress-concentration section 402b of the set of stress-concentration sections 402a-n may be formed at a second depth with respect to the surface 503. In some embodiments, the second depth is different than the first depth. For example, the first depth of the first stress-concentration section 402a may be greater than the second depth of the second stress-concentration section 402b. Alternatively, the first depth of the first stress-concentration section 402a may be less than the second depth of the second stress-concentration section 402b. In other embodiments, the first stress-concentration section 402a and the second stress-concentration section 402b may include a corresponding depth.

In some embodiments, the third stress-concentration section 402c of the set of stress-concentration sections 402a-n may be formed at the second depth with respect to the surface 503 and the fourth stress-concentration section 402n of the set of stress-concentration sections 402a-n may be formed at the first depth with respect to the surface 503. In other embodiments, the third stress-concentration section 402c of the set of stress-concentration sections 402a-n may be formed at the first depth with respect to the surface 503 and the fourth stress-concentration section 402n of the set of stress-concentration sections 402a-n may be formed at the second depth with respect to the surface 503. In other embodiments, the third stress-concentration section 402c and the fourth stress-concentration section 402n may include a corresponding depth.

In some embodiments, the set of stress-concentration sections 402a-n may be located in in an area of a base of the metal elastomer element 102 to generate a local stress concentration effect on the surface 103 of the metal elastomer element 102. For example, the local stress concentration effect provided by the set of stress-concentration sections 402a-n may provide two or more local strain peaks such that the one or more sensing elements 106a-n may be arranged at the location of the strain peaks. In some embodiments, using two strain peaks with different amplitudes, a combination of one or more pairs of strain gauges can be arranged. Thus, in some embodiments, a Wheatstone bridge circuit may be provided with differential signal output. For example, since the strain peak is brought by the set of stress-concentration sections 402a-n, the position of the strain peak may be fixed (e.g., contained) by the set of stress-concentration sections 402a-n, thereby minimizing drift and/or measurement errors provided by the one or more sensing elements 106a-n.

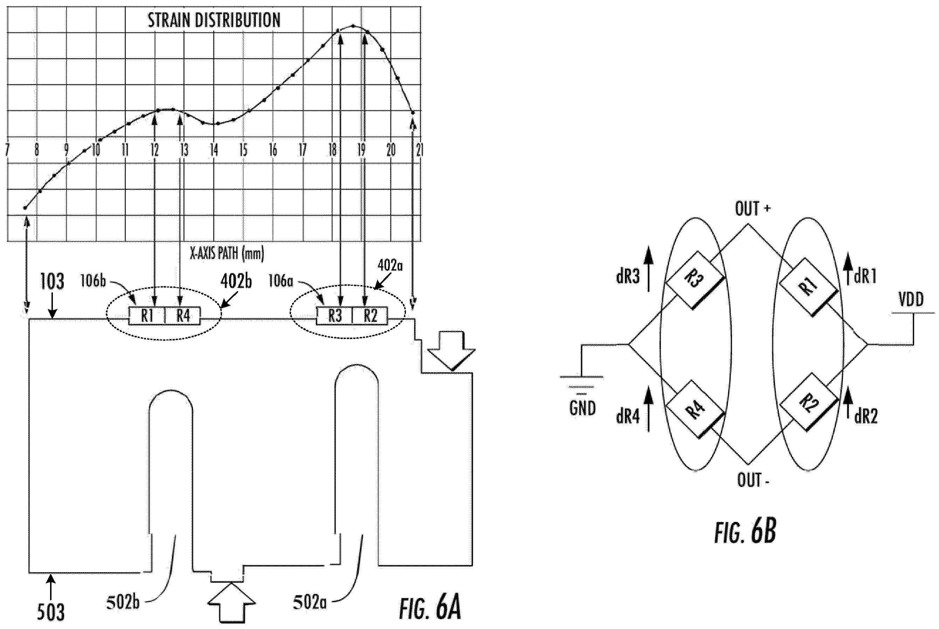

FIG. 6A illustrates a strain distribution provided by the set of stress-concentration sections 402a-n associated with the metal elastomer element 102 in accordance with various embodiments of the present disclosure. For example, a sensing element 106a of the one or more sensing elements 106a-n may be disposed on the first stress-concentration section 402a of the set of stress-concentration sections 402a-n. Additionally, a sensing element 106b of the one or more sensing elements 106a-n may be disposed on the second stress-concentration section 402b of the set of stress-concentration sections 402a-n. In various embodiments, a strain distribution provided by the set of stress-concentration sections 402a-n may be a plateau at the respective locations of the set of stress-concentration sections 402a-n. In some embodiments, the sensing element 106a may be disposed on a back side of a slot 502a of the set of slots 502a-n and the sensing element 106b may be disposed on a back side of a slot 502b of the set of slots 502a-n. For example, the sensing element 106a may be disposed on a first area of the surface 103 (e.g., the stress-concentration section 402a) that aligns with the slot 502a formed on the surface 503. Additionally, the sensing element 106b may be disposed on a second area of the surface 103 (e.g., the stress-concentration section 402b) that aligns with the slot 502b formed on the surface 503. In some embodiments, the sensing element 106a associated with the first stress-concentration section 402a may correspond to a first resistance and a second resistance (e.g., R2 and R3) of a Wheatstone bridge circuit. Additionally, the sensing element 106b associated with the second stress-concentration section 402b may correspond to a third resistance and a fourth resistance (e.g., R1 and R4) of the Wheatstone bridge circuit.

FIG. 6B illustrates an example Wheatstone bridge circuit provided by output of the one or more sensing elements 106a-n in accordance with various embodiments of the present disclosure. For example, two resistances (e.g., R2 and R3) provided by the sensing element 106a associated with the first stress-concentration section 402a and two resistances (e.g., R1 and R4) provided by the sensing element 106b associated with the second stress-concentration section 402b may be divided into two bridge arms of a Wheatstone bridge circuit such that:

$$\text{Vout} = (\text{Vout}+) - (\text{Vout}-) = (\frac{R3+dR3}{R3+R1+dR1+dR3} - \frac{R4+dR4}{R4+R2+dR4+dR2}) \times \text{VDD} = \frac{dR3-dR4}{2R+dR1+dR3} \times \text{VDD}$$

As such, by mounting the sensing element 106a and the sensing element 106b on the same side of the metal elastomer element 102, mounting tilt associated with the one or more sensing elements 106a-n may be mitigated. Additionally, during a scenario where the one or more sensing elements 106a-n are associated with a position offset, $dR1 \approx dR2$, $dR3 \approx dR4$, and accuracy of output of the one or more sensing elements 106a-n may be maintained. Moreover, by placing the one or more sensing elements 106a-n at the set of stress-concentration sections 402an, drift associated with output of the one or more sensing elements 106a-n may be mitigated and/or the output of the one or more sensing elements 106a-n may be provided with improved stability for various type of operating scenarios for the force sensing apparatus 101.

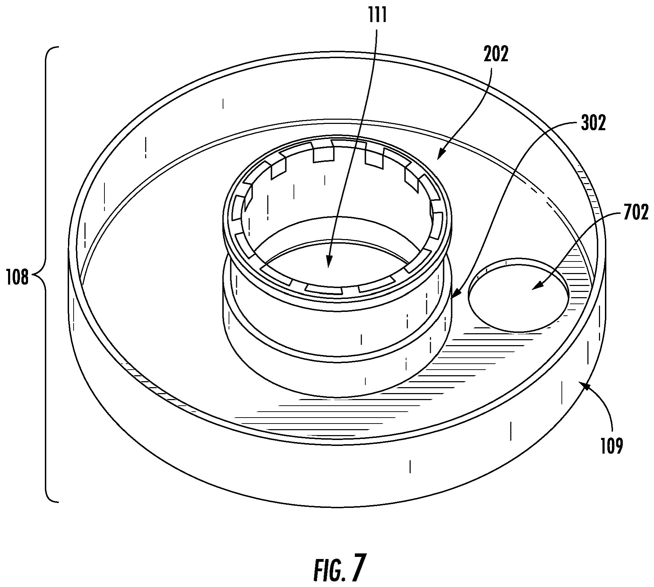

Referring to FIG. 7, a diagram depicting a perspective view 700 of the housing unit 108 in accordance with various embodiments of the present disclosure is provided. The perspective view 700 may illustrate to one or more embodiments of the housing unit 108. In various embodiments, the housing unit 108 includes the surface 109 with the through hole portion 111. In various embodiments, the through hole portion 111 may be associated with the plastic material 302 of the housing unit 108 that enables attachment of the housing unit 108 to the metal elastomer element 102 via the through hole portion 105 of the metal elastomer element 102. In various embodiments, the rubber structure 202 may be attached to the plastic material 302 of the housing unit 108 to further enable attachment of the housing unit 108 to the metal elastomer element 102 via the through hole portion 105 of the metal elastomer element 102. In some embodiments, the surface 109 may further include a through hole portion 702. The through hole portion 702 may be configured to allow integration of the connector element 204 with the housing unit 108. For example, the connector element 204 may be attached to the housing unit 108 via the through hole portion 702.

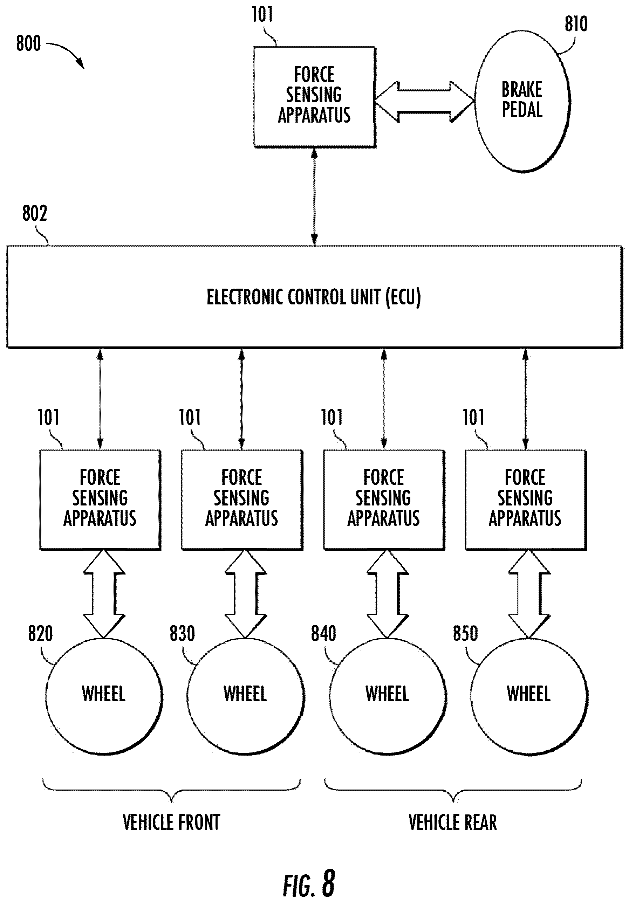

FIG. 8 illustrates an example vehicle braking system 800 in accordance with various embodiments of the present disclosure. In various embodiments, the vehicle braking system 800 may be an EMB system. The vehicle braking system 800 includes an electronic control unit (ECU) 802 and at least one implementation of the force sensing apparatus 101. In various embodiments, the force sensing apparatus 101 may provide the communication data 310 to the ECU 802 to enable control of one or more components of a vehicle. In some embodiments, the force sensing apparatus 101 may be implemented with respect to a brake pedal 810 of a vehicle. For example, the force sensing apparatus 101 may be communicatively coupled to a brake pedal 810 of a vehicle to provide sensing of a brake force associated with the brake pedal 810. In some embodiments, the force sensing apparatus 101 may be additionally or alternatively implemented with respect to a wheel of a vehicle. For example, the force sensing apparatus 101 may be communicatively coupled to a wheel of a vehicle to provide sensing of a brake force associated with a wheel. In a non-limiting example, the force sensing apparatus 101 may be implemented with respect to a wheel 820 (e.g., a first vehicle front wheel), a wheel 830 (e.g., a second vehicle front wheel), a wheel 840 (e.g., a first vehicle back wheel), and/or a wheel 850 (e.g., a second vehicle back wheel) to enable sensing a respective brake force associated with the wheel 820, the wheel 830, the wheel 840, and/or the wheel 850.

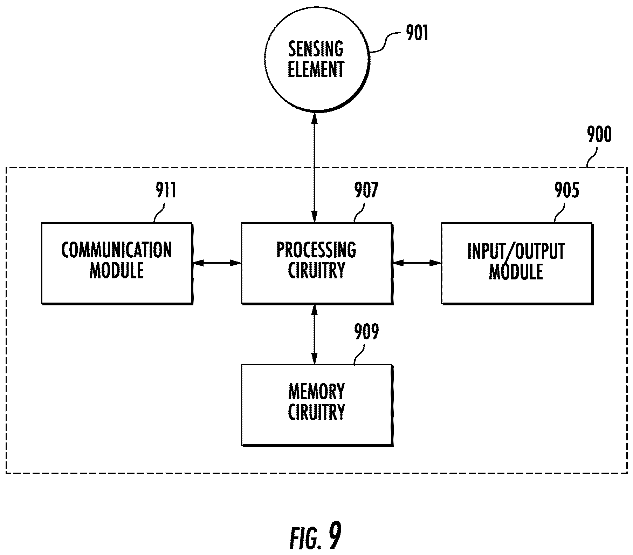

Referring now to FIG. 9, an example system depicting an example controller component 900 of an example apparatus in accordance with various embodiments of the present disclosure is provided. In particular, the example controller component 900 includes input/output module 905, processing circuitry 907, memory circuitry 909, and communications circuitry 911. Additionally, the controller component 900 is electrically coupled to and/or in electronic communication with a force sensing apparatus (e.g., such as, but not limited to, force sensing apparatus 101 described above in connection with FIG. 1). In various embodiments, at least one sensing element 901 of the force sensing apparatus may be electronically coupled to the input/output module 905, the processing circuitry 907, the memory circuitry 909, and/or the communications circuitry 911 to enable transmission and/or exchange of information and data via wired or wireless connections between and among one another.

In one or more embodiments, the sensing element 901 may be or comprise an apparatus/device (e.g., such as, but not limited to, the force sensing apparatus 101 described above in connection with FIG. 1) that detects, measures, and/or identifies brake force(s) associated with a vehicle braking system. In some embodiments, the sensing element 901 may comprise the circuit board element 104 and/or the set of sensing elements 106a-n. In some embodiments, the sensing element 901 may be configured to transmit one or more control signals (e.g., the communication data 310) indicative of a brake force associated with a vehicle braking system (e.g., the vehicle braking system 800) based on one or more deformations associated with a metal elastomer element (e.g., the metal elastomer element 102).

As used herein, the term "processing circuitry" refers to a circuitry or circuitries that may be configured to perform processing functions and/or software instructions on one or more input signals to generate one or more output signals. In various embodiments of the present disclosure, the processing circuitry 907 may perform processing functions and/or software instructions on signals that are received from the sensing element 901. In some embodiments, the processing circuitry 907 may correspond to the circuit board element 104 that transforms a brake force indication sensed by the set of sensing elements 106a-n into the communication data 310. In some embodiments, the processing circuitry 907 may correspond to the ECU 802 that receives and/or processes the communication data 310 provided by the force sensing apparatus 101.

In some embodiments, the processing circuitry 907 may be implemented as, for example, various devices comprising one or a plurality of microprocessors with accompanying digital signal processors; one or a plurality of processors without accompanying digital signal processors; one or a plurality of coprocessors; one or a plurality of multi-core processors; one or a plurality of controllers; processing circuits; one or a plurality of computers; and various other processing elements (including integrated circuits, such as ASICs or FPGAs, or a certain combination thereof). In some embodiments, the processing circuitry 907 may comprise one or more processors. In one exemplary embodiment, the processing circuitry 907 is configured to execute instructions stored in the memory circuitry 909 or otherwise accessible by the processing circuitry 907. When executed by the processing circuitry 907, these instructions may enable the controller component 900 to execute one or a plurality of the functions as described herein. No matter whether it is configured by hardware, firmware/software methods, or a combination thereof, the processing circuitry 907 may comprise entities capable of executing operations according to the embodiments of the present invention when correspondingly configured. Therefore, for example, when the processing circuitry 907 is implemented as an ASIC, an FPGA, or the like, the processing circuitry 907 may comprise specially configured hardware for implementing one or a plurality of operations described herein. In these examples, the ASIC is an integrated circuit that may be customized for processing signals. In some examples, the ASIC may be fully customized or semi-customized for the particular application of processing signals. In some examples, the ASIC may be a programmable ASIC that allows circuit reconfiguration. In some embodiments, other suitable forms of the processing circuitry 907 may be implemented. Alternatively, as another example, when the processing circuitry 907 is implemented as an actuator of instructions (such as those that may be stored in the memory circuitry 909), the instructions may specifically configure the processing circuitry 907 to execute one or a plurality of algorithms and operations described herein, such as those discussed with reference to FIG. 9.

Referring back to FIG. 9, the processing circuitry 907 may be electronically coupled to the input/output module 905, memory circuitry 909 and/or the communications circuitry 911.

The memory circuitry 909 may be non-transitory and may include, for example, one or more volatile and/or non-volatile memories. The memory circuitry 909 may be configured to store information and data (such as processing functions and/or software instructions). The memory circuitry 909, together with the processing circuitry 907, may cause the controller component 900 to perform various processing functions and/or software instructions in accordance with example embodiments of the present disclosure, including, for example, determining the thermal conductivity of the gaseous substance. In some embodiments, the memory circuitry 909 may comprise, for example, a volatile memory, a non-volatile memory, or a certain combination thereof. Although illustrated as a single memory in FIG. 9, the memory circuitry 909 may comprise a plurality of memory components. In various embodiments, the memory circuitry 909 may comprise, for example, a hard disk drive, a random access memory, a cache memory, a flash memory, a Compact Disc Read-Only Memory (CD-ROM), a Digital Versatile Disk Read-Only Memory (DVD-ROM), an optical disk, a circuit configured to store information, or a certain combination thereof. The memory circuitry 909 may be configured to store information, data, application programs, instructions, and etc., so that the controller component 900 can execute various functions according to the embodiments of the present disclosure. For example, in at least some embodiments, the memory circuitry 909 is configured to cache input data for processing by the processing circuitry 907. Additionally or alternatively, in at least some embodiments, the memory circuitry 909 is configured to store program instructions for execution by the processing circuitry 907. The memory circuitry 909 may store information in the form of static and/or dynamic information. When the functions are executed, the stored information may be stored and/or used by the controller component 900.

The communications circuitry 911 may comprise, for example, a device or circuitry embodied in either hardware or a combination of hardware and software that is configured to receive and/or transmit data from/to a network and/or any other device, circuitry, or module in communication with the controller component 900 and/or the sensing element 901. In this regard, the communications circuitry 911 may include, for example, a network interface for enabling communications with a wired or wireless communication network. In some embodiments, the communications circuitry 911 may be implemented as any apparatus included in a circuit, hardware, a computer program product or a combination thereof, which is configured to receive and/or transmit data from/to another component or apparatus. The computer program product comprises computer-readable program instructions stored on a computer-readable medium (for example, the memory circuitry 909) and executed by a controller component 900 (for example, the processing circuitry 907). In some embodiments, the communications circuitry 911 (as with other components discussed herein) may be at least partially implemented as the processing circuitry 907 or otherwise controlled by the processing circuitry 907. In this regard, the communications circuitry 911 may communicate with the processing circuitry 907, for example, through a bus. The communications circuitry 911 may comprise, for example, antennas, transmitters, receivers, transceivers, network interface cards and/or supporting hardware and/or firmware/software, and is used for establishing communication with another apparatus. The communications circuitry 911 may be configured to receive and/or transmit any data that may be stored by the memory circuitry 909 by using any protocol that can be used for communication between apparatuses. The communications circuitry 911 may additionally or alternatively communicate with the input/output module 905, memory circuitry 909, and/or any other component of the controller component 900, for example, through a bus.

In some embodiments, the controller component 900 may comprise an input/output module 905. The input/output module 905 may communicate with the processing circuitry 907 to receive instructions input by the user and/or to provide audible, visual, mechanical or other outputs to the user. Therefore, the input/output module 905 may comprise supporting devices, such as a keyboard, a mouse, a display, a touch screen display, and/or other input/output mechanisms. Alternatively, at least some aspects of the input/output module 905 may be implemented on a device used by the user to communicate with the controller component 900. The input/output module 905 may communicate with the memory circuitry 909, the communications circuitry 911 and/or any other component, for example, through a bus. One or a plurality of input/output modules and/or other components may be included in the controller component 900.

In FIG. 9, although components 901, 905, 907, 909, and 911 may be described with respect to functional limitations, it is contemplated that the particular implementations necessarily include the use of particular hardware. It is also contemplated that certain of these components 901, 905, 907, 909, and 911 may additionally include one or more similar or common hardware. For example, the sensing element 901 may additionally include a processing circuitry, such that the sensing element 901 may detect and process various signals. In various examples, the controller component 900 may operate to generate measurements indicating a flow rate of a flowing media within the sensing element 901.

While the description above provides an example controller component 900, it is noted that the scope of the present disclosure is not limited to the description above. In some examples, an example controller component may comprise one or more additional and/or alternative elements, and/or may be structured/positioned differently than that illustrated in FIG. 9.

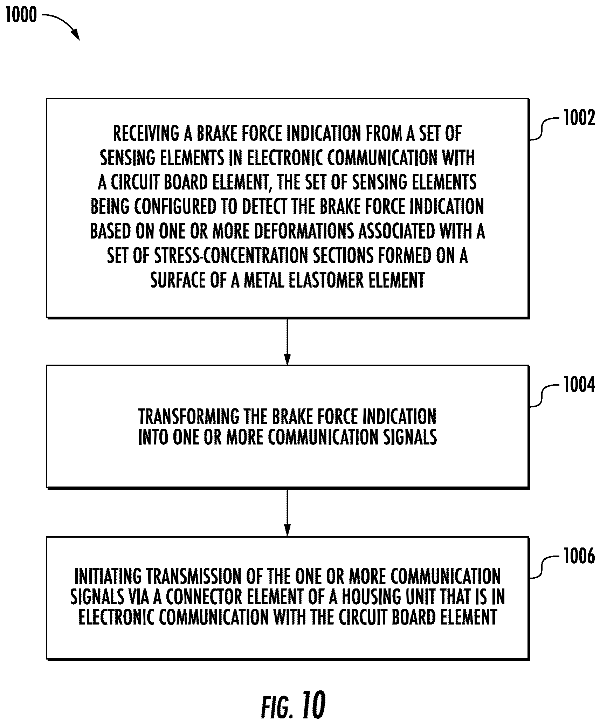

FIG. 10 illustrates a method 1000 for providing force sensing in accordance with one or more embodiments described herein. In one or more embodiments, method 1000 may be a computer-implemented method. The method 1000 may be executed and/or performed by the processing circuitry 907, for example. In one or more embodiments, the method 1000 may be executed and/or performed by the circuit board element 104. In one or more embodiments, the method 1000 begins with receiving a brake force indication from a set of sensing elements in electronic communication with a circuit board element, the set of sensing elements being configured to detect the brake force indication based on one or more deformations associated with a set of stress-concentration sections formed on a surface of a metal elastomer element (block 1002). For example, the set of sensing elements may be disposed on the set of stress-concentration sections. In some embodiments, the set of sensing elements may be additionally disposed between the metal elastomer element and the circuit board element. The method 1000 additionally or alternatively includes transforming the brake force indication into one or more communication signals (block 1004). The method 1000 additionally or alternatively includes initiating transmission of the one or more communication signals via a connector element of a housing unit that is in electronic communication with the circuit board element (block 1006).

In some embodiments, the set of stress-concentration sections is formed proximate to a through hole of the metal elastomer element.

In some embodiments, the set of stress-concentration sections are associated with a set of slots. In some embodiments, the set of sensing elements is disposed on an area of the surface associated with the set of slots.

In some embodiments, the surface is a first surface of the metal elastomer element, a first stress-concentration section of the set of stress-concentration sections is formed at a first depth with respect to a second surface of the metal elastomer element, a second stress-concentration section of the set of stress-concentration sections is formed at a second depth with respect to the second surface, and the second depth is different than the first depth.

In some embodiments, the set of sensing elements include a set of strain gauges.

In some embodiments, the set of sensing elements form a Wheatstone bridge circuit.

In some embodiments, the set of sensing elements include a first set of sensing elements disposed on a first stress-concentration section of the set of stress-concentration sections. In some embodiments, the set of sensing elements additionally include a second set of sensing elements disposed on a second stress-concentration section of the set of stress-concentration sections. In some embodiments, the first set of sensing elements and the second set of sensing elements form a Wheatstone bridge circuit.

In some embodiments, a housing unit includes a connector element electrically coupled to the circuit board element to receive the one or more communication signals via the circuit board element.

In some embodiments, the vehicle braking system is an electrical-mechanical braking system.

In some embodiments, the metal elastomer element includes stainless steel.

Many modifications and other embodiments of the present disclosure set forth herein will come to mind to one skilled in the art to which these embodiments pertain having the benefit of the teachings presented in the foregoing descriptions and the associated drawings. Therefore, it is to be understood that the disclosure are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

**Claims**

1. 1. A force sensing apparatus comprising:

   a metal elastomer element that comprises a set of stress-concentration sections formed on a surface of the metal elastomer element;
   a set of sensing elements disposed on the set of stress-concentration sections; and
   a circuit board element that comprises a shape associated with the surface of the metal elastomer element, wherein the set of sensing elements is further disposed between the metal elastomer element and the circuit board element, and the set of sensing elements are configured to (i) detect a brake force associated with a vehicle braking system based on one or more deformations associated with the set of stress-concentration sections formed on the surface of the metal elastomer element and (ii) transform the brake force into one or more electrical signals configured for processing via the circuit board element.

2. The force sensing apparatus of claim 1, wherein the set of stress-concentration sections is formed proximate to a through hole of the metal elastomer element.

3. The force sensing apparatus of any one of claims 1-2, wherein the set of stress-concentration sections are associated with a set of slots, and the set of sensing elements is disposed on an area of the surface associated with the set of slots.

4. The force sensing apparatus of any one of claims 1-3, wherein the surface is a first surface of the metal elastomer element, a first stress-concentration section of the set of stress-concentration sections is formed at a first depth with respect to a second surface of the metal elastomer element, a second stress-concentration section of the set of stress-concentration sections is formed at a second depth with respect to the second surface, and the second depth is different than the first depth.

5. The force sensing apparatus of any one of claims 1-4, wherein the set of sensing elements comprise a set of strain gauges.

6. The force sensing apparatus of any one of claims 1-5, wherein the set of sensing elements form a Wheatstone bridge circuit.

7. The force sensing apparatus of any one of claims 1-6, wherein the set of sensing elements comprise (i) a first set of sensing elements disposed on a first stress-concentration section of the set of stress-concentration sections and (ii) a second set of sensing elements disposed on a second stress-concentration section of the set of stress-concentration sections.

8. The force sensing apparatus of claim 7, wherein the first set of sensing elements and the second set of sensing elements form a Wheatstone bridge circuit.

9. The force sensing apparatus of any one of claims 1-8, further comprising:
   a housing unit that comprises a connector element electrically coupled to the circuit board element to receive communication data associated with the one or more electrical signals via the circuit board element.

10. The force sensing apparatus of any one of claims 1-9, wherein the vehicle braking system is an electrical-mechanical braking system.

11. The force sensing apparatus of any one of claims 1-10, wherein the metal elastomer element comprises stainless steel.

12. A method comprising:

receiving, by a circuit board element, a brake force indication from a set of sensing elements in electronic communication with the circuit board element, wherein the set of sensing elements are disposed between a metal elastomer element and the circuit board element, and the set of sensing elements are configured to detect the brake force indication based on one or more deformations associated with a set of stress-concentration sections formed on a surface of the metal elastomer element;

transforming, by the circuit board element, the brake force indication into one or more communication signals; and

initiating, by the circuit board element, transmission of the one or more communication signals via a connector element of a housing unit that is in electronic communication with the circuit board element.

13. The method of claim 12, wherein the set of stress-concentration sections is formed proximate to a through hole of the metal elastomer element, wherein the set of stress-concentration sections are associated with a set of slots, and the set of sensing elements is disposed on an area of the surface associated with the set of slots.

14. The method of any one of claims 12-13, wherein the surface is a first surface of the metal elastomer element, a first stress-concentration section of the set of stress-concentration sections is formed at a first depth with respect to a second surface of the metal elastomer element, a second stress-concentration section of the set of stress-concentration sections is formed at a second depth with respect to the second surface, and the second depth is different than the first depth.

15. The method one of claims 12-14, wherein the set of sensing elements comprise (i) a first set of sensing elements disposed on a first stress-concentration section of the set of stress-concentration sections and (ii) a second set of sensing elements disposed on a second stress-concentration section of the set of stress-concentration sections, and wherein the first set of sensing elements and the second set of sensing elements form a Wheatstone bridge circuit.

FIG. 1

FIG. 2

FIG. 3

FIG. 4

FIG. 5

FIG. 6A

FIG. 6B

EP 4 737 873 A1

FIG. 7

*FIG. 8*

FIG. 9

1000

```
┌─────────────────────────────────────────────────┐
│  RECEIVING A BRAKE FORCE INDICATION FROM A SET OF │ ⌐ 1002
│  SENSING ELEMENTS IN ELECTRONIC COMMUNICATION     │
│  WITH A CIRCUIT BOARD ELEMENT, THE SET OF SENSING │
│  ELEMENTS BEING CONFIGURED TO DETECT THE BRAKE    │
│  FORCE INDICATION BASED ON ONE OR MORE            │
│  DEFORMATIONS ASSOCIATED WITH A SET OF            │
│  STRESS-CONCENTRATION SECTIONS FORMED ON A        │
│  SURFACE OF A METAL ELASTOMER ELEMENT             │
└─────────────────────────────────────────────────┘
                         │
                         ▼
┌─────────────────────────────────────────────────┐
│  TRANSFORMING THE BRAKE FORCE INDICATION          │ ⌐ 1004
│  INTO ONE OR MORE COMMUNICATION SIGNALS           │
└─────────────────────────────────────────────────┘
                         │
                         ▼
┌─────────────────────────────────────────────────┐
│  INITIATING TRANSMISSION OF THE ONE OR MORE       │ ⌐ 1006
│  COMMUNICATION SIGNALS VIA A CONNECTOR ELEMENT OF │
│  A HOUSING UNIT THAT IS IN ELECTRONIC             │
│  COMMUNICATION WITH THE CIRCUIT BOARD ELEMENT     │
└─────────────────────────────────────────────────┘
```

*FIG. 10*

Europäisches
Patentamt

European
Patent Office

Office européen
des brevets

# EUROPEAN SEARCH REPORT

**Application Number**

EP 25 20 4565

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 641 065 A (KUNSHAN LINGKE SENSING TECH CO LTD) 13 September 2024 (2024-09-13) * paragraphs [0003], [0031] - paragraph [0042]; figures * ----- | 1-15 | INV. G01L1/22 B60T17/22 |
| X | KR 2010 0112927 A (TYCO ELECTRONICS AMP KOREA LTD [KR]) 20 October 2010 (2010-10-20) * paragraph [0001] - paragraph [0070]; figures * ----- | 1,3-6, 10-12,15 | |

**TECHNICAL FIELDS SEARCHED (IPC)**

G01L
B60T

The present search report has been drawn up for all claims

| Place of search | Date of completion of the search | Examiner |
|---|---|---|
| The Hague | 13 February 2026 | Amroun, Sébastien |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 20 4565

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2026

| Patent document cited in search report | Publication date | Patent family member(s) | Publication date |
|---|---|---|---|
| CN 118641065 A | 13-09-2024 | NONE | |
| KR 20100112927 A | 20-10-2010 | NONE | |

EPO FORM P0459

For more details about this annex : see Official Journal of the European Patent Office, No. 12/82